Europäisches Patentamt

European Patent Office

Office européen des brevets

(19)

(11) Veröffentlichungsnummer : **0 059 900**
**B1**

(12) **EUROPÄISCHE PATENTSCHRIFT**

(45) Veröffentlichungstag der Patentschrift :
13.06.84

(51) Int. Cl.³ : **C 04 B 35/56**

(21) Anmeldenummer : **82101484.2**

(22) Anmeldetag : **26.02.82**

(54) **Verfahren zur Herstellung von Siliziumkarbidkörpern.**

(30) Priorität : **05.03.81 DE 3108259**

(43) Veröffentlichungstag der Anmeldung :
**15.09.82 Patentblatt 82/37**

(45) Bekanntmachung des Hinweises auf die Patenterteilung : **13.06.84 Patentblatt 84/24**

(84) Benannte Vertragsstaaten :
**AT BE CH FR GB LI NL SE**

(56) Entgegenhaltungen :
**DE-A- 2 133 044**
**DE-A- 2 707 299**
**Patent Abstracts of Japan Band 3, Nr. 32, 17. März 1979 Seite 118C40**

(73) Patentinhaber : **Kernforschungsanlage Jülich Gesellschaft mit beschränkter Haftung**
**Postfach 1913**
**D-5170 Jülich (DE)**

(72) Erfinder : **Gupta, Ashok Kumar**
**Artilleriestrasse 49**
**D-5170 Jülich (DE)**
Erfinder : **Gyarmati, Ernö, Dr.**
**Lorsbecker Strasse 54**
**D-5170 Jülich (DE)**
Erfinder : **Kreutz, Hermann**
**Fösterweg 3 b**
**D-4050 Mönchengladbach 3 (DE)**
Erfinder : **Münzer, Rudolf**
**Tilsiterstrasse 7**
**D-5110 Alsdorf (DE)**
Erfinder : **Naoumidis, Aristides, Dr.**
**Kreisbahnstrasse 30**
**D-5170 Jülich (DE)**
Erfinder : **Nickel, Hubertus, Prof.**
**Am Waldeck 5**
**D-5170 Jülich 5 (DE)**

Jouve, 18, rue St-Denis, 75001 Paris, France

## Beschreibung

Die Erfindung bezieht sich auf ein Verfahren zur Herstellung von Siliziumkarbidkörpern ausgehend von gegebenenfalls mit Siliziumkarbid versetztem Kohlepulver und verkokbarem Bindemittel durch Erzeugung eines kohlenstoffhaltigen Vorkörpers und Silizierung desselben mit flüssigem oder dampfförmigem Silizium.

Die Imprägnierung grafitischer Vorkörper mit dampfförmigem oder flüssigem Silizium zur Umwandlung des Kohlenstoffs in Siliziumkarbid ist seit langem bekannt und ist der Gegenstand zahlreicher Publikationen und Patentschriften.

Von P. Popper (GB-A 866 813 und US-A 3 275 722) sowie P. Popper und D.G.S. Davies (Powder Metallurgy 8 (1961) 113) wird die Herstellung eines Grünkörpers auf silizierbarer Kohlenstoffbasis ausführlich dargestellt. Hiernach wird der Füller, ein Gemisch aus kolloidalem Grafit und SiC-Pulver verschiedener Korngröße, in einer Kugelmühle einer nassen Homogenisierung unterworfen. Das Homogenisat wird anschließend getrocknet. Unter Zugabe von Binder, wie z. B. wasserlöslicher Zellulose, Wachsemulsion oder Polyvinylalkohol überführt man das zuvor zum Pulver verriebene Trockengut zum Preßpulver. Zwischen Drücken von 50-70 MPa erfolgt das Pressen der Formkörper, die dann bei 40 °C bzw. 110 °C solange getrocknet werden, bis der Binder vollständig entfernt worden ist.

Nach M. Couach, DE-A 2 058 239, wird ein Vorkörper aus Grafitpulver mit einer Korngröße von 1-100 μm und einem Bindemittel wie Harzgummi, Schleimstoffen, Stärke, Äthylzellulose, Leinöl etc. nach Agglomerieren, Trocknen und Verpressen hergestellt. Der erhaltene poröse Vorkörper wird dann einer Behandlung mit Kohlenwasserstoffen unterworfen. Dabei scheidet sich Pyrokohlenstoff ab und die Dichte des Körpers erreicht einen Wert zwischen 1,4 und 1,5 g cm$^{-3}$.

E. Phillips und W. Hutchings (AECL 3462 von 1971) nehmen SiC-Pulver verschiedener Kornfraktionen, kolloidalen Grafit, Lampenruß und Zuckermelasse oder phenolische Harze als Ausgangsmaterialien. Nach einer Homogenisierung in i-Propanol wird der erhaltene Brei getrocknet und der resultierende « Kuchen » pulverisiert. Durch Sieben und Mischen der verschiedenen Siebfraktionen erhält man ein Preßpulver. Aus diesem werden dann bei Drücken zwischen 6,5 und 105 MPa Preßlinge hergestellt, die vor der Silizierung noch 2 Stunden lang bei 150 °C wärmebehandelt werden.

Nach H. Luhleich, u. a. (DE-A 21 33 044) wird in einem organischen Lösungsmittel ein Binder wie Phenolformaldehydharz, Pech, Teer etc. gelöst und der pulverförmige Füller aus Petrolkoks, Elektrografit, Ruß und dergleichen eingerührt. In die Aufschlämmung wird Wasser zugeführt, wodurch der Binder ausfällt und sich mit dem Füller absetzt. Der gewonnene Schlamm wird anschließend getrocknet und pulverisiert. Das Pulver kann entweder durch Anteigen mit einem Methanol-Wasser-Gemisch oder durch eine Methanol-Dampfbehandlung in Keramik-Matrizen der Formgebung unterworfen werden. Zum Schluß werden die Formkörper getrocknet und verkokt.

Von N.G. Schrewelius (DE-A 14 46 978) wird bei der Herstellung des porösen silizierbaren Körpers neben kubischem und hexagonalem SiC auch Graphit und amorpher Kohlenstoff als Füller eingesetzt.

W.B. Hillig und C.R. Morclock (DE-A 27 07 299) verwenden bei der Herstellung von zerspanbaren Gußkörpern Kohlenstoff- oder Grafitfaser verkokte Pflanzenfasern, Lampenruß, fein zerteilte Kohle, Holz, Holzkohle usw. als Reaktionskomponente bei der Umsetzung mit flüssigem Silizium zum Siliziumkarbid.

Die zahlreichen Bemühungen besagen, daß ein allgemein anerkanntes Verfahren zur Herstellung von Siliziumkarbidformkörpern noch nicht existiert und eine Optimierung auf unterschiedliche Weise versucht wird. Dabei kann als Maß für die Güte des erzielten Produkts seine Dichte und durchgreifende Umsetzung zum Siliziumkarbid angesehen werden. Ferner spielt die Formstabilität des Körpers bei der Silizierung eine wichtige Rolle.

Es wurde nun festgestellt, daß man eine überraschend verbesserte Imprägnierungstiefe des Kohlevorkörpers sowie eine beschleunigte Umsetzung zum SiC und Formstabilität bei der Silizierung erhalten kann, wenn für die Herstellung des Kohleformkörpers Aktivkohle als Füller verwendet wird. So zeigt beispielsweise ein unter Verwendung von Aktivkohle hergestellter Kohlevorkörper im Vergleich zu einem entsprechenden, aber mit Holzkohle erzeugten Vorkörper eine auf das Doppelte angewachsene Imprägnierungstiefe.

Das erfindungsgemäße Verfahren zur Herstellung von Siliziumkarbidkörpern durch Silizierung eines kohlenstoffhaltigen Vorkörpers ist demgemäß dadurch gekennzeichnet, daß man für die Herstellung des Vorkörpers ein Kohlepulver verwendet, das zu 20 bis 100 Gew.% aus Aktivkohle besteht.

Dieses aktivkohlehaltige Kohlepulver kann gegebenenfalls mit bis zu 10 bis 60 Gew.% Siliziumkarbid versetzt sein.

Ein auf diese Weise hergestellter Körper zeichnet sich durch eine tiefgreifende Silizierung und hohe Dichte aus. Während bei bekannten Kohlevorkörpern bei Imprägnierungstiefen von 15, 10 bzw. 5 mm Dichtewerte für das erhaltene Siliziumkarbid von 2,60, 2,65 bzw. 2,7 g/cm$^3$ erzielt werden, erhält man gemäß der Erfindung noch bei Imprägnierungstiefen von 30 mm (beidseitige Imprägnierung) Dichtewerte, die fast an 3 g/cm$^3$ herankommen. Dabei zeigen die Körper bei der Herstellung gute Formtreue und Maßhaltigkeit, wie anhand der Fertigung von Probestäbchen festgestellt werden konnte, die nicht nur ihre Dimensionen, sondern auch die Form beibehielten. Nach anderen Verfahren gefertigte Stifte zeigen dagegen nach der Silizierung einen beträchtlichen Prozentsatz an Ausschuß (verbogenen Stiften).

Das zur Bildung des Kohlevorkörpers benutzte Kohlepulver besteht gemäß der Erfindung mindestens zu 20 % aus Aktivkohle, während der Rest durch herkömmliche Füller wie Graphit, Elektrographit, Petrolkoks, Ruß, Holzkohle und dergleichen gebildet werden kann. Diese herkömmlichen Füller werden insbesondere, wenn sie mehr als 50 % des Kohlepulvers ausmachen, einer aktivierenden Vorbehandlung mit Säuren, Laugen, Lösungsmitteln oder anderen aktivierenden Chemikalien und/oder Entfettungsmitteln unterworfen. So kann beispielsweise als Ausgangsmaterial eine Mischung aus 20 % Aktivkohle und 80 % Ruß verwendet werden, der zuvor mit Ammoniak oder einem fettentfernenden Lösungsmittel behandelt worden war. Mitverwendete Koksanteile sollten durch oxidierende Säuren wie Salpetersäure oder Schwefelsäure vorbehandelt werden. Diese Mitverwendung herkömmlicher Füller auf Kohlenstoffbasis, die gegebenenfalls vorbehandelt werden, kann sich aus Kostengründen als zweckmäßig erweisen, während der Vorzug einer Pulvermasse zu geben ist, deren Kohlepulveranteil zu 100 % durch Aktivkohle gebildet wird.

Gemäß der Erfindung wird der zu formenden Masse aus Aktivkohle und verkokbarem Binder gegebenenfalls Siliziumkarbid zugesetzt. Der Binderanteil der Masse liegt bei Werten von 20 bis 60 Gew.% des Pulvers bzw. Mischpulvers, insbesondere um etwa 30 Gew.% je nach Ausgangsmaterial, wobei Mischpulver mit höheren Siliziumkarbidanteilen weniger Binder benötigen. Der Aktivkohleanteil liegt zweckmäßiger-weise zwischen 20 und 70 % der zu formenden Masse, insbesondere bei 40 Gew.% im Falle eines Mischpulvers, das zwischen 10 und 60 Gew.% Siliziumkarbid enthalten kann.

Der Binder wird mit dem Ausgangspulver möglichst gleichmäßig vermischt, das bei nur mäßigen Drucken zu Vorkörpern geformt wird, die nach im Fachbereich bekannten Verfahren vorsichtig « getrocknet » und verkokt und nachfolgend mit Silizium siliziert werden, was z. B. durch Tauchbehandlung und Umsetzung oder Silizierung mit gasförmigem Silizium erreicht werden kann.

Nachfolgend werden Beispiele zur Erläuterung der Erfindung angegeben :

## Beispiel 1

Ein Gemisch aus
40 % Phenolformaldehydharz
60 % Aktivkohle

wurde nach gängigen Verfahren vermischt und zu einem 30 mm dicken Prisma verpreßt. Nach dem Verkoken wurde der Vorkörper nach der üblichen Methode im Tauchverfahren siliziert. Der erhaltene SiC-Körper wurde in der Mitte durchgeschnitten, poliert und mikroskopisch untersucht. Die Umsetzung war im ganzen Querschnitt gleichmäßig. Die Dichte des Materials betrug 2,95 g cm$^{-3}$. Die Probe zeigte eine Maßhaltigkeit von 0,5 % und eine ausgezeichnete Formstabilität.

## Beispiel 2

Aus einem Gemisch von
30 % Crackbenzinrückstand
30 % α-Siliziumkarbid
40 % Aktivkohle

wurde, wie im Beispiel 1 angegeben, ein Prisma hergestellt. Nach der Silizierung zeigte das Material eine hervorragende Gleichmäßigkeit und wies eine Dichte von 3,05 g cm$^{-3}$ auf. Die Maßhaltigkeit betrug 0,3 %.

## Beispiel 3

Aus einem Gemisch aus
30 % Steinkohlenteerpech
20 % Aktivkohle
50 % α-SiC

wurden Prismen mit den Abmessungen von 60 × 4,5 × 3,5 mm hergestellt. Nach der Silizierung wies das Material folgende Daten auf :

| | |
|---|---|
| Dichte : | 3,10 g cm$^{-3}$ |
| Maßhaltigkeit : | 0,4 % |
| Formstabilität : | einwandfrei. |

## Beispiel 4

Aus einem Gemisch von
30 % Phenolformaldehydharz
70 % Aktivkohle

**0 059 900**

wurde ein Würfel mit der Kantenlänge von 4 cm hergestellt. Daten des silizierten Materials :

| | |
|---|---|
| Dichte : | 2,95 g cm$^{-3}$ |
| Maßhaltigkeit : | 0,5 % |
| Formstabilität : | einwandfrei |
| Homogenität : | überall gleichmäßig. |

### Ansprüche

1. Verfahren zur Herstellung von Siliziumkarbidkörpern ausgehend von gegebenenfalls mit Siliziumkarbid versetztem Kohlepulver und verkokbarem Bindemittel, durch Erzeugung eines kohlenstoffhaltigen Vorkörpers und Silizierung desselben mit flüssigem oder dampfförmigem Silizium, dadurch gekennzeichnet, daß man für die Herstellung des Vorkörpers ein Kohlepulver verwendet, das zu 20 bis 100 Gew.% aus Aktivkohle besteht.

2. Verfahren nach Anspruch 1, dadurch gekennzeichnet, daß man das der Aktivkohle zugemischte herkömmliche Kohlepulver, wenn es mehr als 50 % des gesamten Kohlepulvers ausmacht, zuvor einer aktivierenden Vorbehandlung unterwirft.

3. Verfahren nach Anspruch 1, dadurch gekennzeichnet, daß man für die Herstellung des Vorkörpers eine Pulvermasse verwendet, die 20 bis 60 Gew.% eines verkokbaren Bindemittels, 20 bis 70 Gew.% Aktivkohle und gegebenenfalls 10 bis 60 Gew.% α-Siliziumkarbid enthält.

### Claims

1. Process for the production of silicon carbide articles starting from carbon powder possibly mixed with silicon carbide, and coking binding agent, by production of a carbon-containing pre-article and siliconisation thereof with silicon in liquid or vapour form, characterised in that a carbon powder which comprises 20 to 100 % by weight of activated carbon is used for the production of the pre-article.

2. Process according to claim 1, characterised in that the conventional carbon powder admixed with the activated carbon, if it amounts to more than 50 % of the total carbon powder, is first of all subjected to an activating preliminary treatment.

3. Process according to claim 1, characterised in that there is used for the production of the pre-article a powder mass which contains 20 to 60 % by weight of a coking binding agent, 20 to 70 % by weight of activated carbon and possibly 10 to 60 % by weight of α-silicon carbide.

### Revendications

1. Procédé de fabrication des corps de carbure de silicium, à partir de poudres de charbon mélangées à des liants cokéfiables et, le cas échéant, à du carbure de silicium, par préparation d'un corps préliminaire carboné et par siliciuration de ce corps par du silicium liquide ou sous forme de vapeur, caractérisé en ce que l'on utilise, pour la préparation du corps préliminaire, une poudre de charbon constituée de 20 à 100 % en poids de charbon actif.

2. Procédé suivant la revendication 1, caractérisé en ce que l'on soumet la poudre de charbon habituelle, qui est additionnée au charbon actif à un traitement préalable d'activation quand il représente plus de 50 % de l'ensemble des poudres de charbon.

3. Procédé suivant la revendication 1, caractérisé en ce que l'on utilise, pour la préparation de l'ébauche du corps, une masse de poudre qui contient de 20 à 60 % en poids d'un agent liant cokéfiable, de 20 à 70 % en poids de charbon actif et, le cas échéant, de 10 à 60 % en poids de carbure de silicium α.